# EUROPEAN PATENT APPLICATION

(11) **EP 1 669 328 A1**
(43) Date of publication of application: **14.06.2006**
(21) Application number: 05380236.9
(22) Date of filing: 25.10.2005
(51) Int. Cl.: C03B 23/025, C03B 29/02, A47K 1/04, B32B 17/10

(54) **Process for manufacturing bathroom fittings out of glass sheets**

(30) Priority: 25.10.2004 ES 200402536
(71) Applicant: Maximino Portoles, José, 12005 Castellón (ES)
(72) Inventor: Maximino Portoles, José, 12005 Castellón (ES)
(74) Representative: Ungria Lopez, Javier

(57) **Abstract**

The process consists of forming two sheets of glass (1 and 2) with the shape of the bathroom fitting to be obtained, placing them parallel to and separate from each other, in order to insert therebetween a layer of resin or highly resistant plastic material (3), wherein said two sheets of glass (1 and 2)) are fixed to form a highly resistant and strong compact assembly, and the corresponding finishing touches are carried out in order to form a bathroom fitting that is suitable for the marketing thereof.

## Description

### OBJECT OF THE INVENTION

As expressed in the title of this specification, the present specification refers to a process for manufacturing bathroom fittings out of sheets of glass, making it possible to obtain, for example glass sinks of different shapes and comprised of two sheets between which there is a middle layer or sheet of resin or plastic material, connecting the two sheets and forming a single highly resistant and strong compact body.

### BACKGROUND OF THE INVENTION

Nowadays glass sinks are made in different shapes, sizes and colors, comprised of a sheet of glass whose thickness can vary approximately between 12 and 20 mm., wherein the glass is heat formed in a furnace in order to obtain the desired shape and size.

Logically, this type of bathroom fittings can on occasions be subjected to sudden changes of temperature, due to the cold water and the hot water that is deposited on them when used, whereas on other occasions the fittings can be subjected to sudden knocks because solid objects, such as bottles of toilet water, glasses or other objects falling on them. The latter, just like sudden changes of temperature can cause the sink itself to break and thus this can be a source of possible accidents causing important injuries to the user.

The same thing can be said in connection with bathtubs, bidets or urinals, in the event that they are made out of glass, although the applicant has no knowledge of this type of bathroom fittings be made out of glass.

There is no doubt that in any case the bathroom fittings corresponding to the sinks that are obtained from glass have the above cited problems and drawbacks.

### DESCRIPTION OF THE INVENTION

By means of the process of the invention, it is possible to obtain bathroom fittings made out of glass in sheets, as they are comprised of two sheets of glass, a top one and a bottom one, and between them there is a middle sheet or layer of resin or plastic material. A highly resistant body that does not break even if it is strongly knocked, is obtained, because in the event that the glass cracks it does not break into pieces since it is joined to the middle layer of resin or plastic material.

The process for obtaining this type of bathroom fitting is based on placing the two pieces of glass parallel to each other and inserting between them the resin mass or plastic material. Said three pieces or sheets are closely joined to one another forming a single body.

In a preferred embodiment of the process, the two pieces of glass are made by melting in two molds, in such a way that the bottom surface of one of them is a copy of the top surface of the other one, all in such a way that both pieces obtained in the molds are inserted one inside the other, sealing them with a suitable separation that can vary between 0.1 and 3 mm. The piece that is between them is filled with a layer of highly resistant resin causing the sticking of the two sheets of glass to the layer of resin, making the assembly solid and preventing in the case of breakage the cracking and detachment of the pieces of glass.

In another embodiment of the process, two flat sheets of glass are used. A high temperature-separating agent separates them and afterwards the assembly is heat formed above a mold over the piece of heat-resistant material. This material has a hole of an adequate size in the center and with the shape that is desired to be obtained, be it circular, square, oval-shaped, etc.

Once the assembly is subjected to the tolerance temperature of the material it drops due to its own weight to the desired depth, which is controlled by mechanical, electric and electronic means, forming two independent pieces or sheets of glass that will be subsequently treated in the same way as in the previous case, in other words, in the way of the first embodiment of the process.

The layer of resin or plastic material can be of any desired color and can even have any type of decoration.

On the other hand, the fact that the body formed by two sheets of glass and the layer or sheet of resin or plastic material is subjected to the corresponding steps of perforation to obtain the hole for the tap should be emphasized. The same is true for the cutting and beveling processes to obtain the final shape and finish of the bathroom fitting, in this case, of a sink, without ruling out the use thereof for obtaining bathtubs, bidets, etc.

In another embodiment of the process, the sheet of glass that is going to act as a cover is previously subjected to a decoration step by melting, plating, etc., rounding the sheet off or not depending on the desired shape. Likewise and afterwards one proceeds in the same way as in the previous cases.

### BRIEF DESCRIPTION OF THE DRAWINGS

In order to complete the description that is going to be made hereinafter and for the purpose of providing a better understanding of the characteristics of the invention, a set of drawings on the basis of which the innovations and advantages of the process for manufacturing bathroom fittings made of sheets of glass made in accordance with the object of the invention will be more easily understood, is attached to this specification.

Figure 1 shows a schematic view of the profile corresponding to the two sheets that take part in the process for manufacturing a bathroom fitting, specifically a sink.

Figure 2 shows a sectioned view of the shape obtained by the two sheets represented in the preceding figure with the middle layer of resin, with the specific shape of the cavity of the bathroom fitting or sink itself.

Figure 3 shows a sectioned view of the pieces that take part in forming a bathroom fitting from two flat sheets of glass and a heat-resistant base.

Figure 4 shows a sectioned view of the shape obtained from the arrangement of figure 3.

Figures 5 and 6 shows respective side and plan views of another embodiment of the process object of the invention, where the top sheet of glass includes a top decoration by melting.

### DESCRIPTION OF THE PREFERRED EMBODIMENT

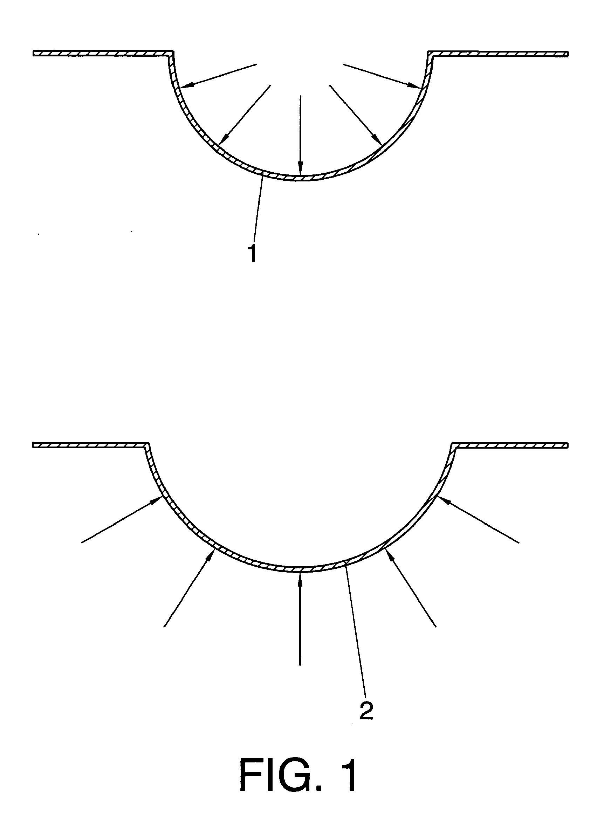

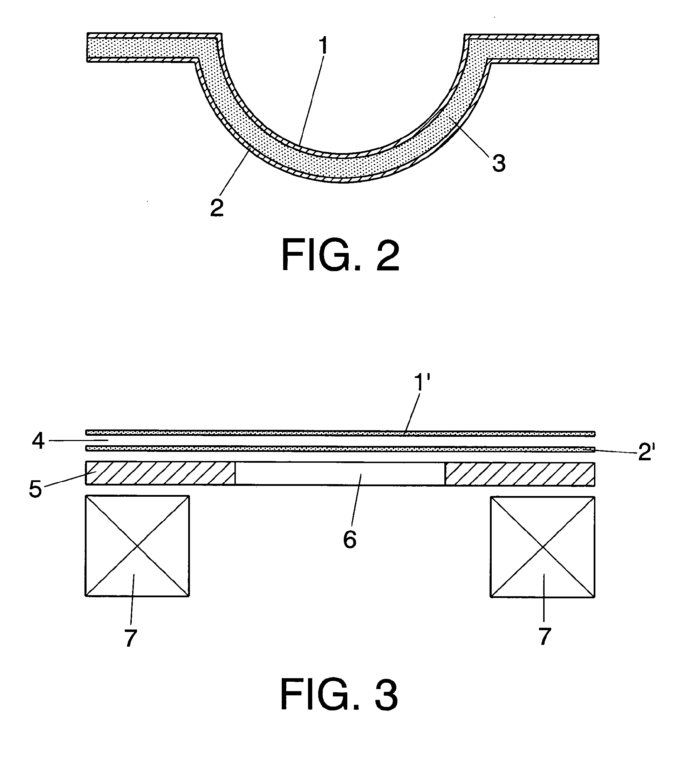

In view of the cited figures and in connection specifically with figures 1 and 2, a pair of pieces of glass 1 and 2 are obtained in a mold in the process of the invention, in such a way that the inside surface of one of them, specifically piece 1, has to be identical to the top surface of the other one, in other words, in this case of piece 2. In this way both are placed one inside the other with an appropriate separation as represented in figure 2 and a layer of highly resistant resin or suitable plastic material is applied between them. This causes the sticking together of the two sheets of glass 1 and 2 to the cited layer or sheet of resin 3, achieving a highly resistant compact assembly that prevents the pieces of glass from cracking and being detached in the event that the body formed by these three layers or sheets 1, 2 and 3 breaks. The body will have the above-cited shape and will correspond to that of a bathroom fitting and specifically to the shape of a sink.

Figure 3 shows another way of carrying out the process, in other words, a different embodiment thereof, in such a way that in this case, two flat sheets of glass 1' and 2' are used and between them there is a separating agent 4. On them there is a heat-resistant base or mold 5, with a hole 6 whose shape and size has to be the appropriate one in accordance with the shape of the bathroom fitting which is desired to be obtained. The heat-resistant base 5 rests on some bottom supports 7, as one can see in figure 3.

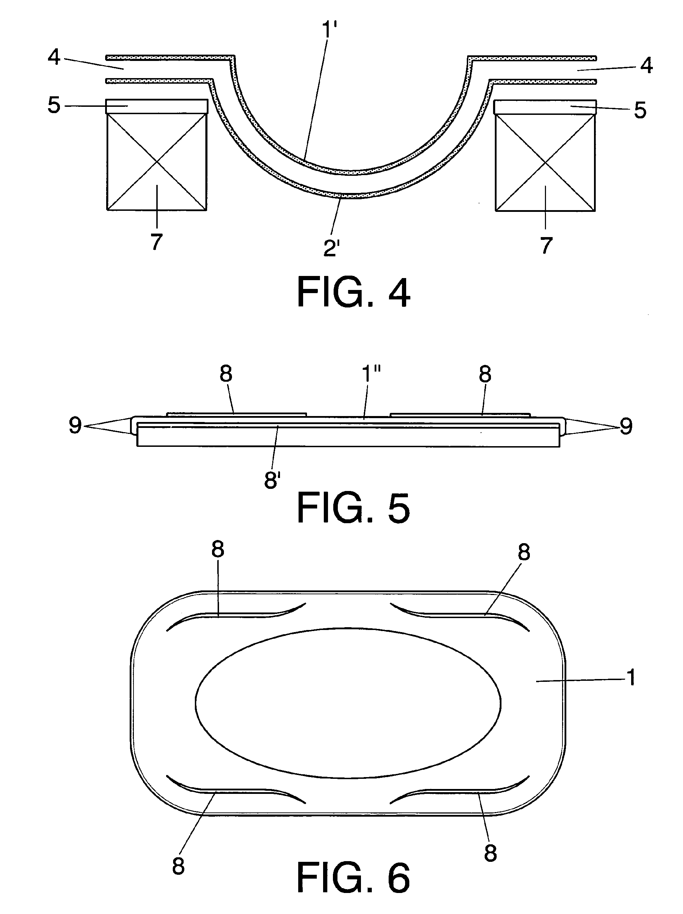

The cited sheets of glass 1' and 2' are heat formed with the separating agent 4 on the mold or heat-resistant piece 5, in such a way that once the assembly has been subjected to the tolerance temperature of the material, due to its own weight, it drops down the desired depth in order to attain the shape represented in figure 4, a drop that will be controlled by appropriate means, obtaining sheets of glass 1' and 2' with the desired shape. Afterwards they are treated according to the process of figure 2, in other words, placing them parallel to each other and applying between the two the corresponding layer of resin, which can be of different colors or be provided with one type of decoration or another.

In any case, the product obtained is subjected to processes of cutting and beveling of the edges, as well as to the making of holes for the tap, etc., for the purpose of obtaining a totally finished bathroom fitting. Finally figures 5 and 6 show a way to obtain a decoration of the top sheet of glass 1'', on which a decoration by melting 8 is applied, providing it with some edges that may or may not be rounded 9, depending on the desired shape. On the bottom surface there is another type of plated or melted decoration 8', after which the same steps as in the preceding cases are carried out.

## Claims

1. Process for manufacturing bathroom fittings out of sheets of glass, that being provided preferably to obtain sinks or any other type of bathroom fitting, be they bathtubs, bidets and the like, is **characterized in that** it consists of placing two sheets of glass (1 or 1') and (2 or 2') parallel to each other and placing between them a middle layer (3) of a material selected between highly resistant resin or plastic material, to which the two sheets of glass (1 or 1') and (2 or 2') are joined to in order to obtain a highly resistant and strong compact body; and **in that** said sheets of class (1 or 1') and (2 or 2') are heat shaped in order to obtain the shape of a bathroom fitting.

2. Process for manufacturing bathroom fittings out of sheets of glass, according to claim 1, **characterized in that** the two pieces of glass (1) and (2) are obtained by melting in a mold with the bottom surface of one of said pieces identical to the top surface of the other one, placing one inside the other and sealing them with an appropriate separation, and filling the space between them with the layer of resin (3).

3. Process for manufacturing bathroom fittings out of sheets of glass, according to claim 1, **characterized in that** the sheets of glass (1' and 2') are placed in a furnace, with a high temperature separating means (4) inserted between them, carrying out a heat forming of the assembly on a mold or piece of heat-resistant material (5).

4. Process for manufacturing bathroom fittings out of sheets of glass, according to claim 3, **characterized in that** the mold or piece of heat-resistant material (5) has a center hole (6), with an adequate size and with the desired shape.

5. Process for manufacturing bathroom fittings out of sheets of glass, according to claims 3 and 4, **characterized in that** the assembly formed by the sheets of glass (1' and 2') with the middle separating means (4), is subjected to heating up to a tolerance temperature wherein it drops by gravity in a controlled manner down to the desired depth, in order to obtain the appropriate and independent shape of the two sheets of glass (1' and 2') with the separator (4).

6. Process for manufacturing bathroom fittings out of sheets of glass, according to claims 3, 4 and 5, **characterized in that** the two independent sheets of glass (1' and 2') are introduced one inside the other, sealing with the appropriate separation and filling the space between them with the layer of resin or plastic (3).

7. Process for manufacturing bathroom fittings out of sheets of glass, according to any of the preceding claims, **characterized in that** the assembly formed by the sheets (1 or 1') and (2 or 2') with the middle layer of resin (3), is subjected to beveling, perforating and other operations in order to attain the final shape of the bathroom fitting.

8. Process for manufacturing bathroom fittings out of sheets of glass, according to any of the preceding claims, **characterized in that** on the top sheet of glass (1 or 1' or 1'') that acts as a covering, a decoration and suitable finish (8 and 8') are applied by a method chosen between melting and plating.

9. Process for manufacturing bathroom fittings out of sheets of glass, according to any of the preceding claims, **characterized in that** the middle sheet (3) is materialized in any color and with any type of decoration.
